# EUROPÄISCHE PATENTSCHRIFT

(11) **EP 4 259 983 B1**
(45) Veröffentlichungstag und Bekanntmachung des Hinweises auf die Patenterteilung: **03.04.2024**
(21) Anmeldenummer: 22707134.7
(22) Anmeldetag: 22.02.2022
(51) Int. Cl.: F24F 11/74, F24F 110/40, F24F 110/65, F24F 110/66, F24F 110/70, G05D 7/06

(54) **VOLUMENSTROMREGLER MIT INTEGRIERTEM LUFTGÜTESENSOR**
VOLUME FLOW CONTROLLER WITH INTEGRATED AIR QUALITY SENSOR
RÉGULATEUR DE DÉBIT VOLUMIQUE POURVU DE CAPTEUR DE QUALITÉ DE L'AIR INTÉGRÉ

(30) Priorität: 03.05.2021 EP 21171779
(43) Veröffentlichungstag der Anmeldung: 18.10.2023
(73) Patentinhaber: Gruner AG, 78564 Wehingen (DE)
(72) Erfinder: SPREITZER, Wolfgang, 78564 Wehingen (DE); DILLINGER, Kevin, 78549 Spaichingen (DE); MOSER, Wolfgang, 72364 Obernheim (DE)
(74) Vertreter: Kohler Schmid Möbus Patentanwälte
(86) Internationale Anmeldenummer: PCT/EP2022/054354
(87) Internationale Veröffentlichungsnummer: WO 2022/233472

(56) Entgegenhaltungen:
- WO-A1-84/04801
- WO-A1-98/46978
- WO-A1-2009/109056
- WO-A1-2013/123617

## Beschreibung

Die vorliegende Erfindung betrifft eine Anordnung mit einem Strömungskanal, mit einer Regelklappe, die im Innern des Strömungskanals bewegbar gelagert ist, und mit einem Volumenstromregler, insbesondere für klima- und lüftungstechnische Anlagen, zum Verstellen einer Regelklappe.

Eine solche Anordnung mit einem Volumenstromregler ist beispielsweise durch die WO 2013/123617 A1 bekannt geworden.

Volumenstromregler dienen zum Einstellen eines Volumenstroms durch einen Strömungskanal in klima- und lüftungstechnischen Anlagen. Über einen Druckdifferenzsensor wird im Strömungskanal eine Druckdifferenz bestimmt und hieraus ein Istwert ermittelt. Dieser wird in einer Regeleinrichtung mit einem hinterlegten Sollwert verglichen. Im Falle einer Abweichung verstellt die Regeleinrichtung eine im Strömungskanal vorgesehene Regelklappe, um so den Volumenstrom zwischen einem minimal und einem maximal zulässigen Volumenstrom entsprechend einzustellen.

Der aus WO 2013/123617 A1 bekannte Volumenstromregler weist einen Temperatursensor und/oder einen Drucksensor auf, deren Messwerte während eines Kalibiervorgangs oder während des Betriebsmodus berücksichtigt werden. Ein ähnlicher Volumenstromregler ist auch aus der EP 1 950 508 A2 bekannt.

Demgegenüber ist es die Aufgabe der vorliegenden Erfindung, bei einer Anordnung der eingangs genannten Art den Einsatzbereich des Volumenstromreglers zu vergrö-ßern.

Diese Aufgabe wird erfindungsgemäß durch eine Anordnung mit den Merkmalen von Anspruch 1 gelöst.

Die Erfindung betrifft eine Anordnung gemäß Anspruch 1. Insbesondere ist erfindungsgemäß in dem Volumenstromregler zusätzlich zum Differenzdrucksensor auch ein Luftgütesensor, wie z.B. ein CO₂-Sensor oder VOC(Volatile Organic Compounds)-Sensor, angeordnet. So kann beispielsweise im Fall einer detektierten zu hohen CO2-Konzentration im Strömungskanal der Klappenantrieb von der Regeleinheit elektrisch angesteuert werden, um den Strömungskanal durch die Regelklappe zu verschließen. Dabei können im Messkanal ein einziger Luftgütesensor oder mehrere unterschiedliche Luftgütesensoren angeordnet sein. Die durch den Messkanal strömende Luft prallt nicht auf die Sensorfläche auf, sondern strömt entlang der Sensorfläche, so dass die Messergebnisse nicht durch aufprallende Luft verfälscht werden.

Der mindestens eine Luftgütesensor ist im Messkanal bevorzugt in Reihe mit dem Differenzdrucksensor angeordnet, und zwar entweder zwischen Kanaleinlass und Differenzdrucksensor oder zwischen Differenzdrucksensor.

Besonders bevorzugt weist der Messkanal auf einem geraden Messkanalabschnitt eine Wandaussparung auf, in der der mindestens eine Luftgütesensor angeordnet und mittels einer Dichtung abgedichtet ist.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

Es zeigen:
- Fig. 1: eine perspektivische Ansicht eines Volumenstromreglers einer erfindungsgemäßen Anordnung;
- Fig. 2: schematisch das Innenleben des an einen Strömungskanal angeschlossenen Volumenstromreglers von Fig. 1;
- Fig. 3: eine Sensorik des Volumenstromreglers;
- Fig. 4: einen Luftgütesensor der in Fig. 3 gezeigten Sensorik; und
- Fig. 5: einen Längsschnitt der in Fig. 4 gezeigten Sensorik.

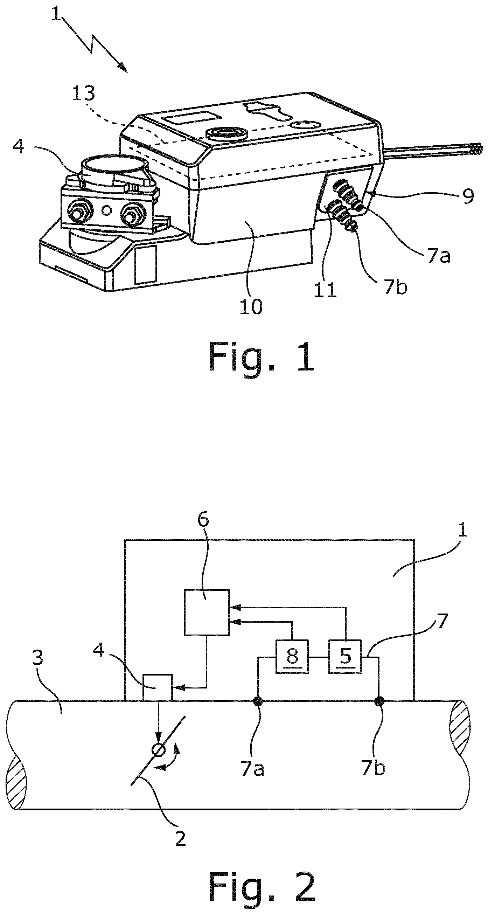

Der in **Fign. 1 und 2** gezeigte Volumenstromregler **1** dient zum Einstellen eines Volumenstroms in klima- und lüftungstechnischen Anlagen mittels einer Regelklappe **2,** die im Inneren eines Strömungskanals **3** schwenkbar gelagert ist.

Dazu umfasst der Volumenstromregler 1 einen Klappenantrieb (z.B. Motor mit Reduktionsgetriebe) **4** zum Verschwenken der Regelklappe 2, einen Differenzdrucksensor **5** zum Messen eines im Strömungskanal 3 herrschenden Differenzdrucks und eine Regeleinheit **6,** die den Klappenantrieb 4 in Abhängigkeit des vom Differenzdrucksensor 5 gemessenen Drucks, also in Abhängigkeit des vom Differenzdrucksensor 5 ausgegebenen elektrischen Differenzdruck-Messsignals, elektrisch ansteuert, um im Strömungskanal 3 einen Soll-Volumenstrom einzustellen. Wie gezeigt, kann der Volumenstromregler 1 vorteilhaft auch den Klappenantrieb 4 aufweisen.

Der Differenzdrucksensor 5 ist in einem hier beispielhaft U-förmigen Messkanal **7** angeordnet, der einenends mit einem Kanaleinlass **7a** und anderenends mit einem Kanalauslass **7b** an den Strömungskanal 3 angeschlossen ist und so einen vom Strömungskanal 3 abgezweigten, separaten Bypasskanal ausbildet. Im Messkanal 7 ist weiterhin ein Luftgütesensor **8** angeordnet, um eine im Strömungskanal 3 herrschende Luftgüte zu messen. Vorzugsweise ist der Luftgütesensor 8 ein CO₂-Sensor oder ein VOC-Sensor. In Abhängigkeit der vom Luftgütesensor 8 gemessenen Luftgüte, also in Abhängigkeit des vom Luftgütesensor 8 ausgegebenen elektrischen Messsignals, steuert die Regeleinheit 6 den Klappenantrieb 4 elektrisch an, um den Strömungskanal 3 entsprechend freizugeben oder zu verschließen. Wie gezeigt, ist der Luftgütesensor 8 bevorzugt in Reihe mit dem Differenzdrucksensor 5, hier beispielhaft zwischen Kanaleinlass 7a und Differenzdrucksensor 5, angeordnet. Alternativ kann der Luftgütesensor 8 im Messkanal 7 auch zwischen Differenzdrucksensor 5 und Kanalauslass 7b angeordnet sein.

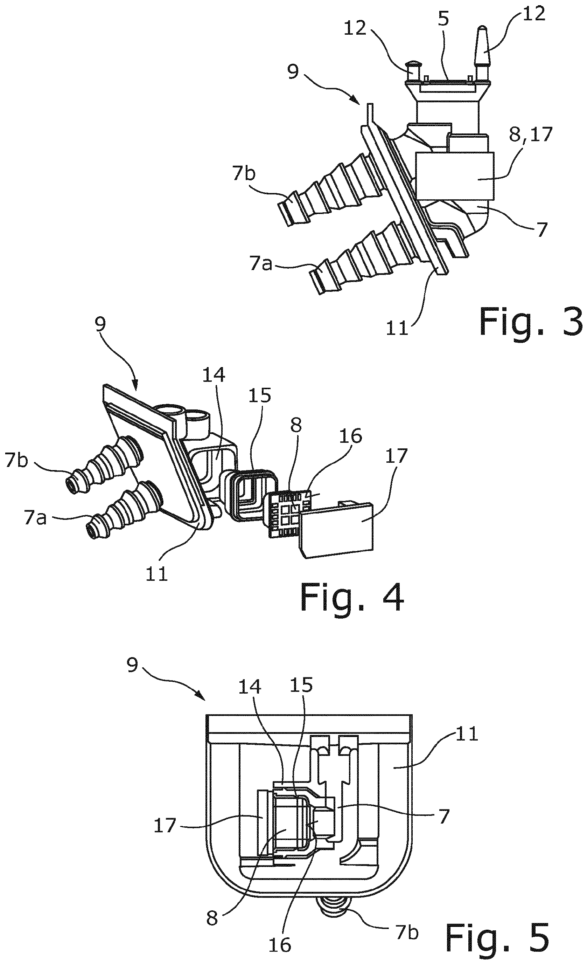

Wie in **Fig. 3** gezeigt, ist der Messkanal 7 samt Kanaleinlass 7a und Kanalauslass 7b als ein separates Abdeckteil **9** (z.B. aus Kunststoff) ausgebildet, das in einer Öffnung eines Reglergehäuses **10** (Fig. 1) befestigt ist. Das Abdeckteil 9 weist eine Abdeckplatte **11** auf, welche die Öffnung des Reglergehäuses 10 verschließt. Der Kanaleinlass 7a und der Kanalauslass 7b befinden sich in Form von Anschlussstutzen auf der Außenseite des Abdeckteils 9, während sich der Messkanal 7 samt Differenzdruck- und Luftgütesensoren 5, 8 auf der Innenseite des Abdeckteils 9 befindet. Das Abdeckteil 9 weist mehrere Rastzapfen **12** auf, mit denen das Abdeckteil 9 an einer Leiterplatte **13** (Fig. 1) der Regeleinheit 6 befestigt ist, und zwar unter gleichzeitiger elektrischer Verbindung des Differenzdrucksensors 5 mit der Leiterplatte 13.

Wie in **Fig. 4** gezeigt, weist der Messkanal 7 auf einem geraden Messkanalabschnitt eine Wandaussparung **14** auf, in der der Luftgütesensor 8 angeordnet und mittels einer Dichtung **15** abgedichtet ist. Eine Sensorfläche **16** des Luftgütesensors 8 verläuft im Messkanal 7 parallel oder nahezu parallel zur Strömungsrichtung der an der Sensorfläche 16 vorbeiströmenden Luft, so dass die durch den Messkanal 7 strömende Luft nicht auf die Sensorfläche 16 aufprallt, sondern, bevorzugt parallel, daran entlangströmt. Der Luftgütesensor 8 ist auf einer Zusatzleiterplatte **17** elektrisch befestigt, die ihrerseits an die Leiterplatte 13, z.B. mittels eines kurzen Kabels, elektrisch angeschlossen ist.

In Fig. 5 ist nochmal in einem Längsschnitt die abgedichtete Anordnung des Luftgütesensors 8 in der Wandaussparung 14 des Messkanals 7 gezeigt.

Statt des gezeigten Luftgütesensors können alternativ auch mehrere unterschiedliche Luftgütesensoren, z.B. ein CO2-Sensor und ein VOC-Sensor, im Messkanal 7 angeordnet und an die Regeleinheit 6 angeschlossen sein.

Wie in **Fig. 3** gezeigt, ist der Messkanal 7 samt Kanaleinlass 7a und Kanalauslass 7b als ein separates Abdeckteil **9** (z.B. aus Kunststoff) ausgebildet, das in einer Öffnung eines Reglergehäuses **10** (Fig. 1) befestigt ist. Das Abdeckteil 9 weist eine Abdeckplatte **11** auf, welche die Öffnung des Reglergehäuses 10 verschließt. Der Kanaleinlass 7a und der Kanalauslass 7b befinden sich in Form von Anschlussstutzen auf der Außenseite des Abdeckteils 9, während sich der Messkanal 7 samt Differenzdruck- und Luftgütesensoren 5, 8 auf der Innenseite des Abdeckteils 9 befindet. Das Abdeckteil 9 weist mehrere Rastzapfen **12** auf, mit denen das Abdeckteil 9 an einer Leiterplatte **13** (Fig. 1) der Regeleinheit 6 befestigt ist, und zwar unter gleichzeitiger elektrischer Verbindung des Differenzdrucksensors 5 mit der Leiterplatte 13.

Wie in **Fig. 4** gezeigt, weist der Messkanal 7 auf einem geraden Messkanalabschnitt eine Wandaussparung **14** auf, in der der Luftgütesensor 8 angeordnet und mittels einer Dichtung **15** abgedichtet ist. Eine Sensorfläche **16** des Luftgütesensors 8 verläuft im Messkanal 7 parallel oder nahezu parallel zur Strömungsrichtung der an der Sensorfläche 16 vorbeiströmenden Luft, so dass die durch den Messkanal 7 strömende Luft nicht auf die Sensorfläche 16 aufprallt, sondern, bevorzugt parallel, daran entlangströmt. Der Luftgütesensor 8 ist auf einer Zusatzleiterplatte **17** elektrisch befestigt, die ihrerseits an die Leiterplatte 13, z.B. mittels eines kurzen Kabels, elektrisch angeschlossen ist.

In Fig. 5 ist nochmal in einem Längsschnitt die abgedichtete Anordnung des Luftgütesensors 8 in der Wandaussparung 14 des Messkanals 7 gezeigt.

Statt des gezeigten Luftgütesensors können alternativ auch mehrere unterschiedliche Luftgütesensoren, z.B. ein CO2-Sensor und ein VOC-Sensor, im Messkanal 7 angeordnet und an die Regeleinheit 6 angeschlossen sein.

## Patentansprüche

1. Anordnung mit einem Strömungskanal (3), mit einer Regelklappe (2), die im Innern des Strömungskanals (3) bewegbar gelagert ist, und mit einem Volumenstromregler (1), insbesondere für klima- und lüftungstechnische Anlagen, zum Verstellen der Regelklappe (2), wobei der Volumenstromregler (1) aufweist:
- einen Messkanal (7) mit einem Kanaleinlass (7a) und einem Kanalauslass (7b) zum Anschließen an den Strömungskanal (3), um einen vom Strömungskanal (3) abgezweigten, separaten Bypasskanal auszubilden,
- einen im Messkanal (7) angeordneten Differenzdrucksensor (5) zum Messen eines im Strömungskanal (3) herrschenden Differenzdrucks und zum Ausgeben eines entsprechenden elektrischen Messsignals, und
- eine Regeleinheit (6) zum elektrischen Ansteuern eines Klappenantriebs (4) in Abhängigkeit des vom Differenzdrucksensor (5) ausgegebenen elektrischen Messsignals, um im Strömungskanal (3) einen Soll-Volumenstrom einzustellen,
wobei im Messkanal (7) mindestens ein Luftgütesensor (8) zum Messen einer im Strömungskanal (3) herrschenden Luftgüte und zum Ausgeben eines entsprechenden elektrischen Messsignals angeordnet ist, wobei der mindestens eine Luftgütesensor (8) eine Sensorfläche (16) aufweist, die im Messkanal (7) parallel oder nahezu parallel zur Strömungsrichtung der an der Sensorfläche (16) vorbeiströmenden Luft angeordnet ist, und wobei die Regeleinheit (6) ausgebildet ist, den Klappenantrieb (4) auch in Abhängigkeit des vom mindestens einen Luftgütesensor (8) ausgegebenen elektrischen Messsignals elektrisch anzusteuern,
wobei der Volumenstromregler (1) mit seinem Kanaleinlass (7a) und seinem Kanalauslass (7b) an den Strömungskanal (3) angeschlossen ist, um einen vom Strömungskanal (3) abgezweigten, separaten Bypasskanal auszubilden, und mit einem von der Regeleinheit (6) elektrisch angesteuerten Klappenantrieb (4) zum Bewegen der Regelklappe (2) in Abhängigkeit der vom Differenzdrucksensor (5) und vom mindestens einen Luftgütesensor (8) ausgegebenen elektrischen Messsignale.

2. Anordnung nach Anspruch 1, **dadurch gekennzeichnet, dass** der Volumenstromregler (1) auch den Klappenantrieb (4) aufweist.

3. Anordnung nach Anspruch 1 oder 2, **dadurch gekennzeichnet, dass** der mindestens eine Luftgütesensor (8) im Messkanal (7) in Reihe mit dem Differenzdrucksensor (5) angeordnet ist.

4. Anordnung nach Anspruch 3, **dadurch gekennzeichnet, dass** der mindestens eine Luftgütesensor (8) im Messkanal (7) zwischen Kanaleinlass (7a) und Differenzdrucksensor (5) oder zwischen Differenzdrucksensor (5) und Kanalauslass (7b) angeordnet ist.

5. Anordnung nach einem der vorhergehenden Ansprüche, **dadurch gekennzeichnet, dass** der Messkanal (7) auf einem geraden Messkanalabschnitt eine Wandaussparung (14) aufweist, in der der mindestens eine Luftgütesensor (8) angeordnet ist.

6. Anordnung nach Anspruch 5, **dadurch gekennzeichnet, dass** der mindestens eine Luftgütesensor (8) in der Wandaussparung (14) mittels einer Dichtung (15) abgedichtet ist.

7. Anordnung nach einem der vorhergehenden Ansprüche, **dadurch gekennzeichnet, dass** der mindestens eine Luftgütesensor (8) ein CO₂-Sensor oder ein VOC-Sensor ist.

8. Anordnung nach einem der vorhergehenden Ansprüche, **dadurch gekennzeichnet, dass** im Messkanal (7) mehrere unterschiedliche Luftgütesensoren (8) angeordnet sind.

9. Anordnung nach einem der vorhergehenden Ansprüche, **dadurch gekennzeichnet, dass** der mindestens eine Luftgütesensor (8), insbesondere mittels Kabel, an die Regeleinheit (6) elektrisch angeschlossen ist.

10. Anordnung nach Anspruch 9, **dadurch gekennzeichnet, dass** der Differenzdrucksensor (5) an einer Leiterplatte (13) der Regeleinheit (6) befestigt und daran elektrisch angeschlossen ist und der mindestens eine Luftgütesensor (8) an die Leiterplatte (13) elektrisch angeschlossen ist.

11. Anordnung nach einem der vorhergehenden Ansprüche, **dadurch gekennzeichnet, dass** der Messkanal (7) an einem insbesondere plattenförmigen Abdeckteil (9) getragen ist, das auf einer Außenseite den Kanaleinlass (7a) und den Kanalauslass (7b) und auf einer Innenseite den Differenzdrucksensor (5) und den Luftgütesensor (8) aufweist.

## Claims

1. An assembly comprising a flow channel (3), a control flap (2) which is movably mounted within the flow channel (3), and a volumetric-flow controller (1), in particular for air-conditioning and ventilation systems, for adjusting the control flap (2), the volumetric-flow controller (1) comprising:
- a measurement channel (7) having a channel inlet (7a) and a channel outlet (7b) for connection to the flow channel (3) in order to form a separate bypass channel branched from the flow channel (3),
- a differential pressure sensor (5) arranged in the measurement channel (7) for measuring a differential pressure prevailing in the flow channel (3) and for outputting a corresponding electrical measurement signal, and
- a control unit (6) for electrically activating a flap drive (4) in dependence on the electrical measurement signal outputted by the differential pressure sensor (5) in order to set a desired volumetric flow rate in the flow channel (3),
wherein at least one air quality sensor (8) for measuring an air quality prevailing in the flow channel (3) and for outputting a corresponding electrical measurement signal is arranged in the measurement channel (7), wherein the at least one air quality sensor (8) has a sensor surface (16) which is arranged in the measurement channel (7) parallel or approximately parallel to the direction of flow of the air flowing past the sensor surface (16), and wherein the control unit (6) is configured to electrically activate the flap drive (4) also in dependence on the electrical measurement signal outputted by the at least one air quality sensor (8),
wherein the volumetric-flow controller (1) is connected to the flow channel (3) by its channel inlet (7a) and its channel outlet (7b) in order to form a separate bypass channel branched from the flow channel (3),
and comprising a flap drive (4) which is electrically activated by the control unit (6) for moving the control flap (2) in dependence on the electrical measurement signals outputted by the differential pressure sensor (5) and by the at least one air quality sensor (8).

2. The assembly as claimed in claim 1, **characterized in that** the volumetric-flow controller (1) also comprises the flap drive (4).

3. The assembly as claimed in claim 1 or 2, **characterized in that** the at least one air quality sensor (8) is arranged in the measurement channel (7) in series with the differential pressure sensor (5).

4. The assembly as claimed in claim 3, **characterized in that** the at least one air quality sensor (8) is arranged in the measurement channel (7) between the channel inlet (7a) and the differential pressure sensor (5) or between the differential pressure sensor (5) and the channel outlet (7b).

5. The assembly as claimed in one of the preceding claims, **characterized in that** the measurement channel (7) has on a straight measurement channel portion a wall recess (14) in which the at least one air quality sensor (8) is arranged.

6. The assembly as claimed in claim 5, **characterized in that** the at least one air quality sensor (8) is sealed in the wall recess (14) by means of a seal (15).

7. The assembly as claimed in one of the preceding claims, **characterized in that** the at least one air quality sensor (8) is a CO₂ sensor or a VOC sensor.

8. The assembly as claimed in one of the preceding claims, **characterized in that** a plurality of different air quality sensors (8) are arranged in the measurement channel (7).

9. The assembly as claimed in one of the preceding claims, **characterized in that** the at least one air quality sensor (8) is electrically connected to the control unit (6), in particular by means of a cable.

10. The assembly as claimed in claim 9, **characterized in that** the differential pressure sensor (5) is fastened to a circuit board (13) of the control unit (6) and is electrically connected thereto, and the at least one air quality sensor (8) is electrically connected to the circuit board (13).

11. The assembly as claimed in one of the preceding claims, **characterized in that** the measurement channel (7) is carried on a cover part (9), in particular a plate-shaped cover part, which has on an outer side the channel inlet (7a) and the channel outlet (7b) and on an inner side the differential pressure sensor (5) and the air quality sensor (8).

## Revendications

1. Agencement comprenant un canal d'écoulement (3), un volet de régulation (2) monté mobile dans l'espace interne dudit canal d'écoulement (3) et un régulateur (1) de débit volumique, en particulier pour des installations techniques de climatisation et de ventilation, en vue du réglage dudit volet de régulation (2), ledit régulateur (1) de débit volumique comportant :
- un canal de mesure (7) muni d'une entrée (7a) et d'une sortie (7b) en vue du raccordement au canal d'écoulement (3), de manière à former un canal de dérivation distinct, bifurquant dudit canal d'écoulement (3),
- un capteur (5) de pression différentielle, logé dans ledit canal de mesure (7) afin de mesurer une pression différentielle régnant dans ledit canal d'écoulement (3), et de délivrer un signal électrique de mesure correspondant, et
- une unité régulatrice (6), affectée au pilotage électrique d'un entraînement (4) du volet en fonction du signal électrique de mesure délivré par ledit capteur (5) de pression différentielle, de façon à instaurer un débit volumique de consigne dans ledit canal d'écoulement (3),
sachant qu'au moins un capteur (8) de qualité de l'air est intégré dans le canal de mesure (7), en vue de mesurer une qualité de l'air régnant dans le canal d'écoulement (3) et de délivrer un signal électrique de mesure correspondant, lequel capteur (8) de qualité de l'air, à présence minimale, est doté d'une surface de détection (16) disposée, dans ledit canal de mesure (7), parallèlement ou à peu près parallèlement à la direction de l'écoulement de l'air circulant en regard de ladite surface de détection (16), et sachant que ladite unité régulatrice (6) est conçue pour piloter électriquement l'entraînement (4) du volet, également en fonction du signal électrique de mesure délivré par ledit capteur (8) de qualité de l'air, à présence minimale,
ledit régulateur (1) de débit volumique étant raccordé au canal d'écoulement (3) par son entrée (7a) de canal et par sa sortie (7b) de canal, de manière à former un canal de dérivation distinct, bifurquant dudit canal d'écoulement (3),
et avec un entraînement (4) de volet, piloté électriquement par ladite unité régulatrice (6), en vue de mouvoir ledit volet de régulation (2) en fonction des signaux électriques de mesure délivrés par le capteur (5) de pression différentielle et par le capteur (8) de qualité de l'air, à présence minimale.

2. Agencement selon la revendication 1, **caractérisé par le fait que** le régulateur (1) de débit volumique est muni également de l'entraînement (4) du volet.

3. Agencement selon la revendication 1 ou 2, **caractérisé par le fait que** le capteur (8) de qualité de l'air, à présence minimale, est disposé en série avec le capteur (5) de pression différentielle dans le canal de mesure (7).

4. Agencement selon la revendication 3, **caractérisé par le fait que** le capteur (8) de qualité de l'air à présence minimale est interposé, dans le canal de mesure (7), entre l'entrée (7a) de canal et le capteur (5) de pression différentielle, ou entre ledit capteur (5) de pression différentielle et la sortie (7b) de canal.

5. Agencement selon l'une des revendications précédentes, **caractérisé par le fait que** le canal de mesure (7) présente, sur un tronçon rectiligne dudit canal de mesure, un évidement (14) qui est pratiqué dans la paroi et dans lequel est logé le capteur (8) de qualité de l'air, à présence minimale.

6. Agencement selon la revendication 5, **caractérisé par le fait que** l'étanchéité du capteur (8) de qualité de l'air, à présence minimale, est assurée au moyen d'une garniture d'étanchement (15) dans l'évidement (14) de la paroi.

7. Agencement selon l'une des revendications précédentes, **caractérisé par le fait que** le capteur (8) de qualité de l'air, à présence minimale, est un capteur de CO₂ ou un capteur de COV.

8. Agencement selon l'une des revendications précédentes, **caractérisé par le fait que** plusieurs capteurs différents (8) de qualité de l'air sont intégrés dans le canal de mesure (7).

9. Agencement selon l'une des revendications précédentes, **caractérisé par le fait que** le capteur (8) de qualité de l'air, à présence minimale, est connecté électriquement à l'unité régulatrice (6) au moyen de câbles, en particulier.

10. Agencement selon la revendication 9, **caractérisé par le fait que** le capteur (5) de pression différentielle est fixé à une plaquette (13) à circuits imprimés de l'unité régulatrice (6) et est connecté électriquement à cette dernière, et le capteur (8) de qualité de l'air, à présence minimale, est connecté électriquement à ladite plaquette (13) à circuits imprimés.

11. Agencement selon l'une des revendications précédentes, **caractérisé par le fait que** le canal de mesure (7) est supporté au niveau d'une partie de recouvrement (9) qui revêt notamment la forme d'une platine et comporte l'entrée (7a) de canal et la sortie (7b) de canal, sur une face extérieure, et le capteur (5) de pression différentielle et le capteur (8) de qualité de l'air sur une face intérieure.
